# EUROPEAN PATENT APPLICATION

(11) **EP 4 546 583 A1**
(43) Date of publication of application: **30.04.2025**
(21) Application number: 24201287.0
(22) Date of filing: 19.09.2024
(51) Int. Cl.: H02G 3/08, H02G 3/10, H02G 3/12, H02G 3/20

(54) **JUNCTION BOX ASSEMBLY FOR ELECTRICAL WIRING**

(30) Priority: 24.10.2023 IT 202300022260
(71) Applicant: GEWISS S.p.A., 24069 Cenate Sotto (Bergamo) (IT)
(72) Inventor: BOSATELLI, Fabio, 24069 Cenate Sotto (Bergamo) (IT)
(74) Representative: Forattini, Amelia

(57) **Abstract**

A junction box assembly for electrical wiring comprising a casing having a bottom wall which has a plurality of fastening points configured to receive respective nails for fastening the box to a surface, for example a wall; each of the fastening points has a circular wall surrounded by three vertical members formed on the bottom wall; the circular wall defines a support plane and the vertical members protrude from the support plane; the support plane receives one end of a nail guide element applied to a nailing machine; the nail guide element is held in place by the vertical members during a nail application operation; the passage of the nail is through a perforation surface made of a soft material, for example rubber.

## Description

The present invention relates to a junction box assembly for electrical wiring.

Junction boxes are used for electrical wiring in a variety of situations and have to be attached to different types of supports.

Typically, the boxes are applied to masonry walls, or other materials, by means of screws or plugs inserted into the rear wall of the box.

US6303862B1 discloses an electrical box with main cavity and separate auxiliary cavity and having optional dimpled hole and strengthening element.

US5942726 discloses a self-attaching electrical box including a fastening element provided on the junction box for temporarily attaching the junction box to a support.

US6303859B1 discloses an electrical junction box with reinforced and locked support for carrying fixtures.

The remarkable presence of electronic and electrical equipment in present day buildings has led to an increasing complexity of the electrical system and the consequent need to ensure a faster and easier installation.

Junction boxes are often mounted on walls using nailing machines that allow the box to be nailed quickly.

However, the nailing operation must be carried out with skill and even the most experienced operator may not operate the tool with precision, especially when working under time pressure.

The aim of the present invention is to provide a junction box assembly for electrical wiring that enables an operator to nail the box correctly and with a quick operation.

Within the scope of this aim a particular object of the invention is to provide a junction box assembly that allows the nailing machine to be positioned perpendicularly and precisely for fastening the box to the wall.

A further object of the invention is to provide a junction box that can be fastened to any type of support with a faster and easier operation with respect to conventional systems.

A further object of the invention is to safeguard the integrity of the box by preventing the energy applied to the nail by the nailing machine from breaking the box while perforating the bottom.

A further object of the present invention is to provide an assembly that, due to its special construction features, is able to ensure the broadest guarantees of reliability and safety in use.

These objects, and others that will become better apparent hereinafter, are achieved by a junction box assembly for electrical wiring as claimed in the appended claims.

Further characteristics and advantages will become better apparent from the description of preferred, but not exclusive, embodiment of the invention, illustrated by way of non-limiting example in the accompanying drawings, wherein:

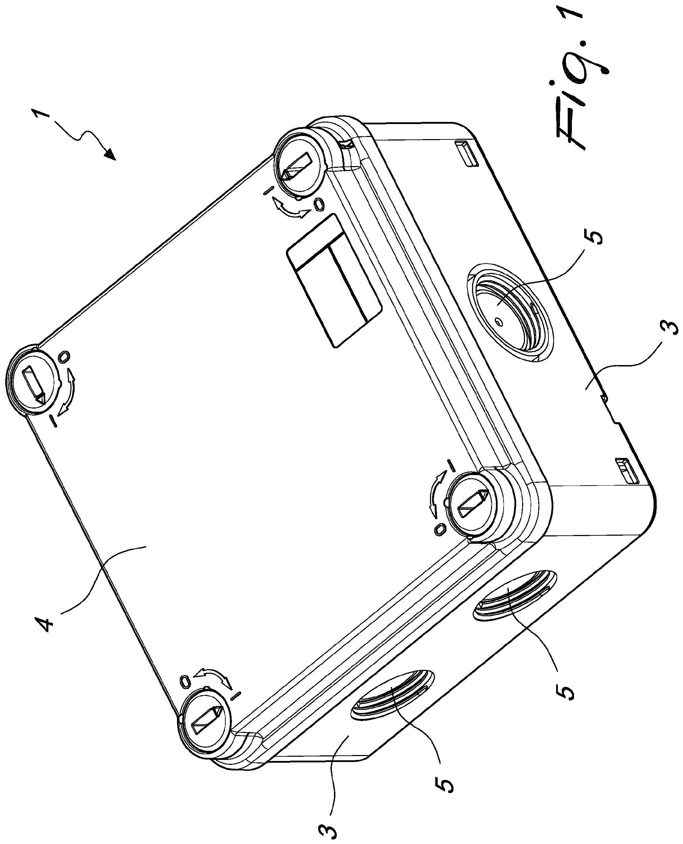

Figure 1 is a perspective view of the box according to the invention;

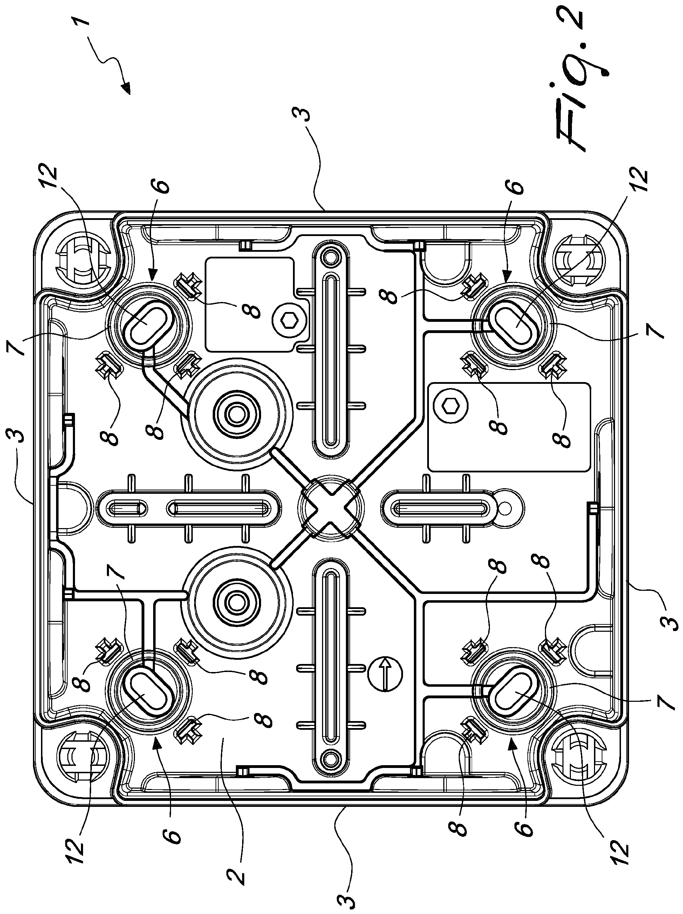

Figure 2 is a plan view of the box, deprived of the lid;

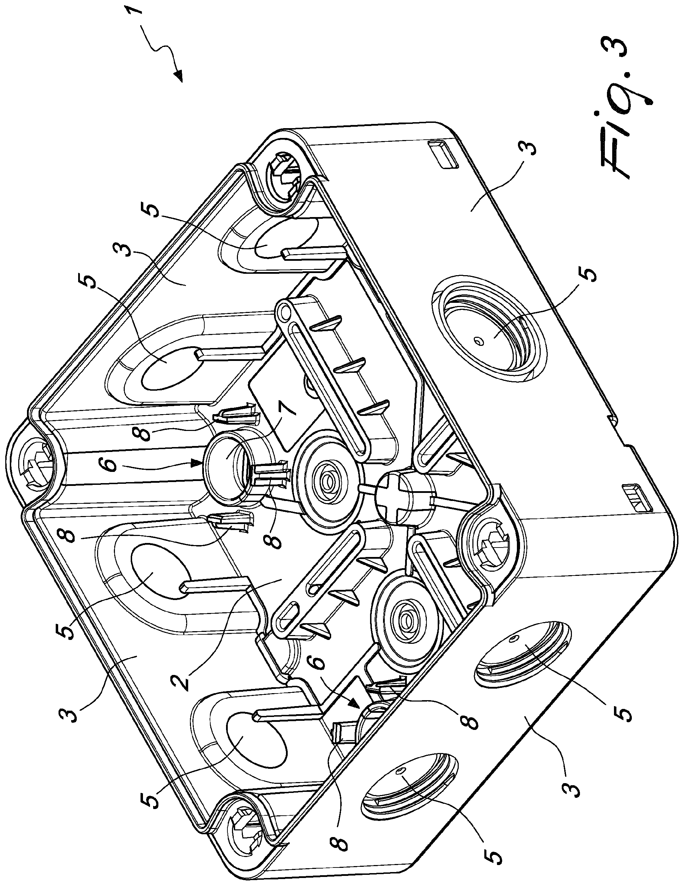

Figure 3 is a perspective view of the box, deprived of the lid;

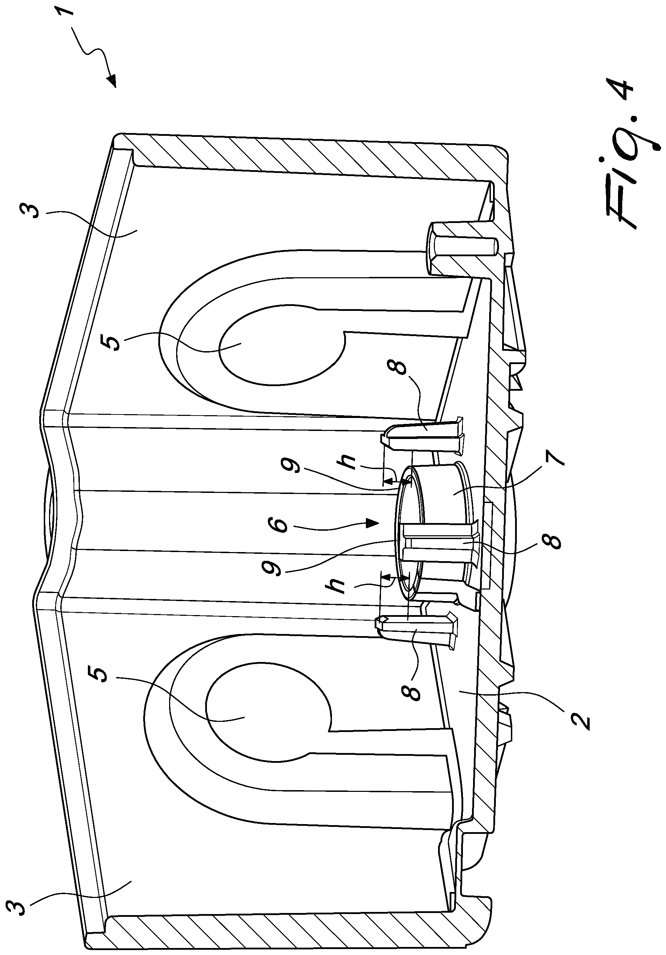

Figure 4 is a partial perspective view illustrating an internal part of the box;

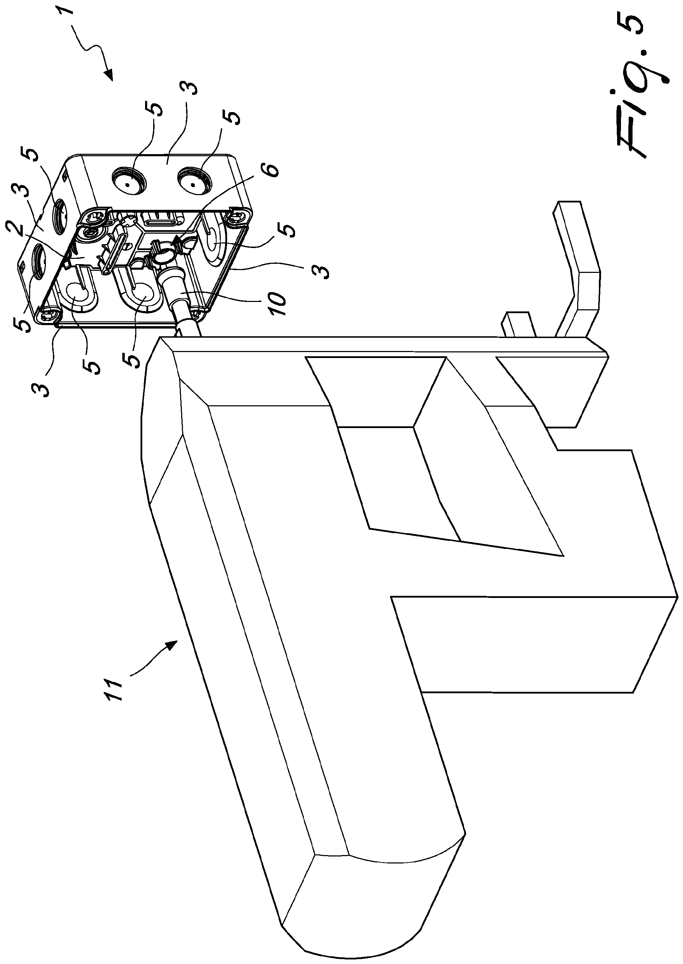

Figure 5 is a perspective view illustrating the junction box assembly according to the invention;

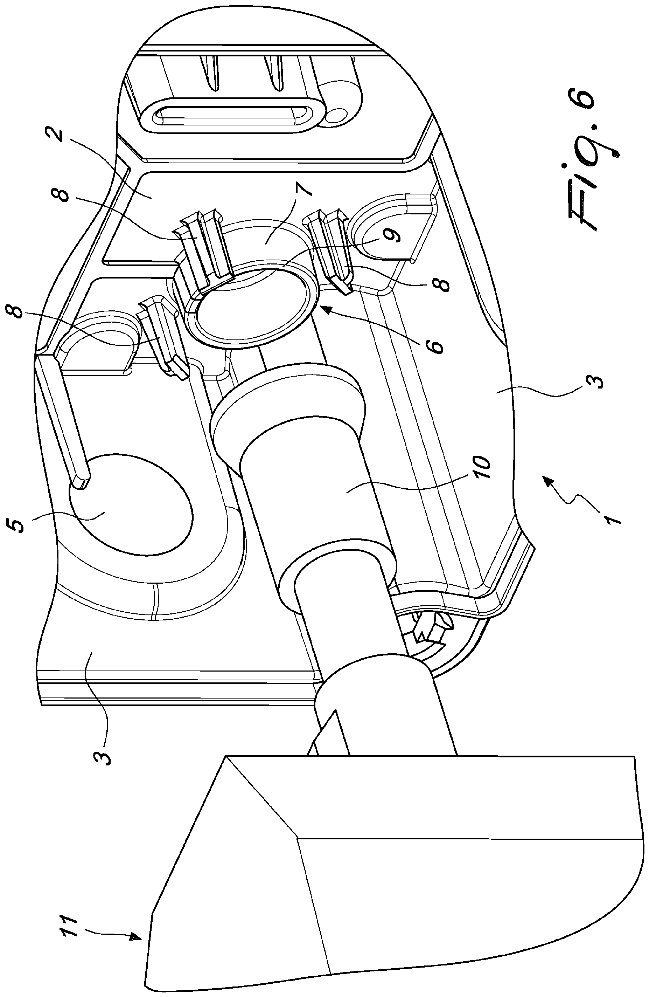

Figure 6 is an enlarged view illustrating the approach of the nail guide to the base of the box;

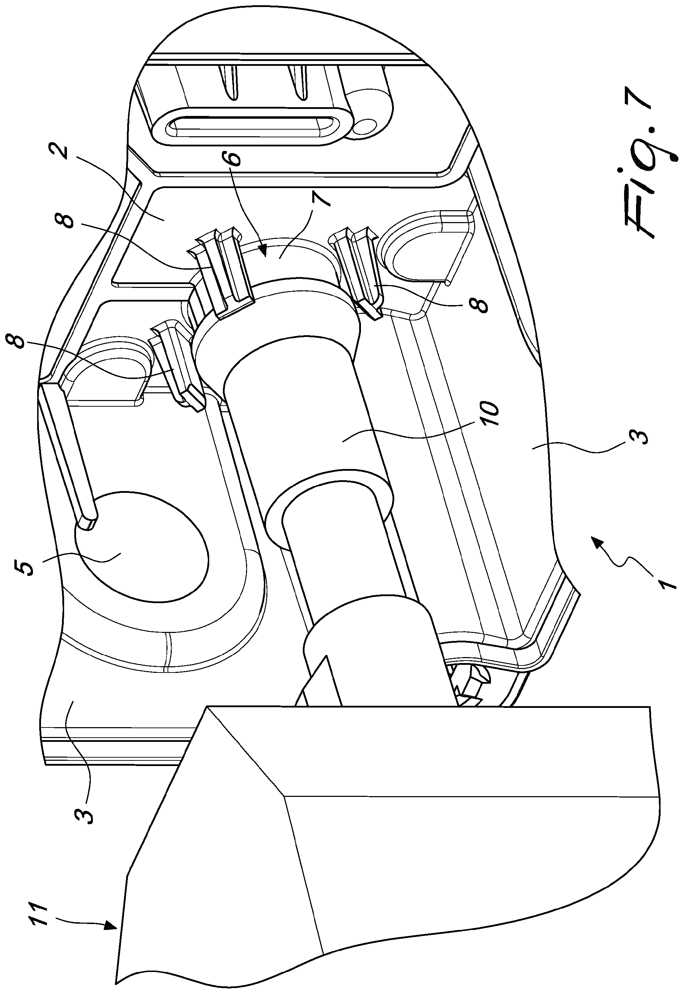

Figure 7 is a similar view to the previous one showing the nail guide in the nail application position.

With reference to the figures, the junction box assembly according to the invention, generally designated by reference number 1, comprises a casing having a bottom wall 2 and side walls 3 forming a housing which is closed at the front by a lid 4.

The side walls 3 include openings obstructed by breakthrough grommets 5 for the passage of electrical cables or cable conduits, in a per se known manner.

According to the invention, the bottom 2 of the casing comprises a plurality of fastening points 6 configured to receive respective nails adapted for fastening the box 1 to a surface, for example a wall, not visible in the figures.

Each fastening point 6 comprises a circular wall 7 which is surrounded by three vertical members 8 formed on the bottom 2 of the casing.

The three vertical members 8 protrude by an elevation h from the plane 9 of the circular wall 7.

According to the invention, a nail guide element 10, applied to a nailing machine 11, is configured to be supported on the plane 9 of the circular wall 7 and held by the three vertical members 8 in a fixed position.

In other words, the support plane 9 receives one end of the nail guide element 10 which is held in place by the same vertical members 8.

The operation of fastening the box 1 to a surface, for example a wall, is performed by positioning the nailing machine 11 at a fastening point 6, so that the nail guide element 10 rests against the plane 9 of the circular wall 7.

The nail guide element 10 is therefore contained between the three vertical members 8 and it is possible to proceed to shoot the nail, avoiding the possibility that the nailing machine moves away from the fastening point.

The operation is repeated for the desired fastening points 6.

When the nailing machine shoots the nail into the single point of fastening of the bottom, the vertical members 8 ensure that the end of the nail guide 10 does not slide transversally on the support plane 9 of the circular wall 7, because it is contained by the same vertical members 8, allowing the shot nail to correctly perforate the thickness of the plane on which the box is resting.

On the bottom 2 of the box 1, in conjunction with each fastening point 6, there are perforation surfaces 12, made of soft material, e.g. rubber, so that the energy transferred from the nail to the box 1 during the perforation of the bottom 2 does not cause it to be damaged.

In practice it has been found that the invention achieves the intended aim and objects.

None of the prior art junction box shows anything such as the three vertical members adapted to correctly position a nail guide element of the present invention.

The vertical members on the bottom of the junction box according to the invention allow the operator to perpendicularly and precisely position the nailing machine for correctly and easily fastening the box to a wall.

An important advantage of the system according to the invention is that it allows also less skilled and experienced operators to install the box quickly and correctly.

## Claims

1. A junction box assembly for electrical wiring comprising a casing comprising at least a bottom wall (2); said bottom wall (2) comprising a plurality of fastening points (6) configured to receive respective mounting nails adapted to fastening said box (1) to a surface; said assembly (1) being **characterized in that** it comprises a nail guide element (10), applied to a nailing machine 11; each of said fastening points (6) comprising a circular wall (7); said circular wall (7) being surrounded by vertical members (8) formed on said back wall (2); said circular wall (7) defining a support plane (9); said vertical members (8) protruding by an elevation (h) with respect to said support plane (9); said support plane (9) receiving one end of said nail guide element (10); said nail guide element (10) being held in position by said vertical members (8) during a nail application operation by means of said nailing machine.

2. The junction box assembly, according to claim 1, **characterized in that** it comprises three vertical members (8).

3. The junction box assembly, according to any one of the preceding claims, **characterized in that** each fastening point (6) has a perforation surface (12) made of a soft material, such as rubber, configured for the passage of said nail.
